(19)

Europäisches
Patentamt
European
Patent Office
Office européen
des brevets

(11) **EP 3 670 469 A1**

(12) **EUROPEAN PATENT APPLICATION**

(43) Date of publication:
24.06.2020 Bulletin 2020/26

(21) Application number: 18214192.9

(22) Date of filing: 19.12.2018

(51) Int Cl.:
*C04B 24/12* (2006.01)          *C04B 28/02* (2006.01)
*B01D 53/86* (2006.01)          *B01J 35/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **HeidelbergCement AG
69120 Heidelberg (DE)**

(72) Inventors:
• **CACCIATORE, Andrea
72100 BRINDISI (IT)**
• **MARCHI, Maurizio Iler
20066 MELZO (IT)**

(74) Representative: **Cattaneo, Elisabetta et al
Notarbartolo & Gervasi S.p.A
Corso di Porta Vittoria, 9
20122 Milano (IT)**

(54) **A CEMENTITIOUS COMPOSITION WITH PHOTOCATALYTIC ACTIVITY UNDER VISIBLE LIGHT**

(57)    The invention relates to a cementitious composition comprising: - a hydraulic binder; - a photocatalyst consisting of at least an alkaline metal salt of poly(heptazine imide); - an optional aggregate and to a cement product obtainable therefrom, preferably selected from the group consisting of a cement mortar, a cement paste and a cement concrete. The invention also relates to a method for photocatalytically decomposing an air pollutant, preferably the nitrogen oxides (NOx) pollutants, comprising the step of contacting the air pollutant with a cement product according to the invention.

EP 3 670 469 A1

**Description**

**FIELD OF THE INVENTION**

The present invention relates to a photocatalytic cementitious composition, for the degradation of pollutants, the decontamination of the environment, and the prolonged retention of the superficial appearance. The photocatalytic cementitious composition is surprisingly activated by visible light.

**PRIOR ART**

Photocatalytic cementitious compositions, which may be applied to various substrates in order to improve the preservability and to reduce the charge of environmental pollutants have long been known.

The photocatalytic layer obtainable by the photocatalytic cement composition applied to said substrates may oxidize and/or decompose a variety of pollutants present in the environment in gaseous or microparticulate form, for instance N-oxides, polycondensed aromatic hydrocarbons, benzene, etc.; photocatalysis converts the above said pollutants into simpler particles, which are non volatile and may easily be washed away, thus preventing their further propagation in the atmosphere, as well as restraining the contaminant action thereof on the treated substrate.

Several patents and patent applications about this topic have been already published. $TiO_2$ has been used in cementitious materials in order to have photocatalytic properties.

International patent application WO98/05601 describes a hydraulic binder and cement compositions having improved property to maintain unaltered, brilliance and coloring quantity for a longer time period, characterized in that they contain, in bulk, particles of a photocatalyst, being said photocatalyst titanium dioxide or a precursor therefor, mainly in the form of anatase.

International patent application WO2004/074202 describes paving blocks for photocatalytic paving comprising at least a base layer in cementitious material and a surface layer based on a cementitious composition comprising: at least a hydraulic binder, a $TiO_2$-based photocatalyst capable of oxidizing organic and inorganic polluting substances present in the environment in the presence of environmental light, air and humidity, at least an aggregate, water and, optionally, a water reducing additive.

Even if the photocatalytic properties of cementitious products under UV light are confirmed, their characterization under visible light conditions has never shown relevant results.

Various type of visible light photocatalysts have been evaluated. They have been divided into two types, for their composition and band gap structure, including metal/non-metal-doped semiconductors with large band gap, metal containing semiconductors with narrow band gap (Liu, Z.; Wu, B.; Zhu, Y.; Wang, F.; Wang, L. J. Colloid Interface Sci. 2013, 392, 337-380; Hou, J.; Cao, R.; Wang, Z.; Jiao, S.; Zhu, H. J. Hazard. Mater. 2012, 217-218, 177-186; Dong, F.; Sun, Y. J.; Fu, M.; Wu, Z. B.; Lee, S. C. J. Hazard. Mater. 2012, 219-220, 26-34; and Dong, F.; Sun, Y. J.; Fu, M.; Ho, W. K.; Lee, S. C.; Wu, Z. B. Langmuir 2012, 28, 766-773). It is known that $TiO_2$ and other stable metal oxide photocatalysts suffer from no or limited visible light absorption due to their large band gap (Kasahara, A.; Mukumizu, K.; Hitoki, G.; Takata, T.; Kondo, J. N.;Hara, M.; Kobayashi, H.; Domen, K. J. Phys. Chem. B 2003, 107, 791-797; Maeda, K.; Teramura, K.; Lu, D.; Takata, T.; Saito, N.; Inoue, Y.;Domen, K. Nature 2006, 440, 295-295; Tessier, F.; Maillard, P.; Chevire, F.; Domen, K.; Kikkawa, S. J.Ceram. Soc. Jpn. 2009, 117, 1-5; Maeda, K.; Domen, K. J. Phys. Chem. C 2007, 111, 7851-7861;Sayama, K.; Arakawa, H. J. Photochem. Photobiol., A: Chem. 1994,77, 243-247), nevertheless TiO2 is the most popular photocatalyst due to its optical properties, high effectiveness and non-toxicity .

Recently, graphitic carbon nitride, a metal free photocatalyst, has attracted intensive interest for its promising applications in photo splitting water, photodecomposition of organic pollutants, and photosynthesis under visible light (Wang, X. C.; Maeda, K.; Thomas, A.; Takanabe, K.; Xin, G.; Carlsson, J. M.; Domen, K.; Antonietti, M. Nat. Mater. 2009, 8, 76-80; Wang, Y.; Wang, X. C.; Antonietti, M. Angew. Chem., Int. Ed. 2012, 51, 68-89) because this material has a band gap of about 2.7 eV and consequently it can absorb light up to 450 nm (in visible field). As a matter of fact, it is first discovered as visible light photocatalyst by Wang et al. in 2009 (Wang, X. C.; Maeda, K.; Thomas, A.; Takanabe, K.; Xin, G.; Carlsson, J. M.; Domen, K.; Antonietti, M. Nat. Mater. 2009, 8, 76-80). Graphitic carbon nitride, also indicated as g-$C_3N_4$, is the most attractive as a potential photocatalyst due to its 2D structure similar to graphene, thermal and chemical stability, moderate band gap and low cost (X. Wang, K. Maeda, Ar. Thomas, K. Takanabe, G. Xin, J.M. Carlsson, K. Domen, M. Antonietti, A metal-free polymeric photocatalyst for hydrogen production from water under visible light, Nat. Mater. 8 (2009) 76-80; Z. Wang, W. Guan, Y. Sun, F. Dong, Y. Zhou, W.-K. Ho, Water-assisted production of honeycomb-like g-C3N4 with ultralong carrier lifetime and outstanding photocatalytic activity, Nanoscale 7 (2015) 2471-2479; S. Wang, C. Li, T. Wang, P. Zhang, A. Li, J. Gong, Controllable synthesis of nanotube-type graphitic C3N4 and their visible-light photocatalytic and fluorescent properties, J. Mater. Chem. A 2 (2014) 2885-2890; A. Schwarzer, T. Saplinova, E. Kroke, Tri-s-triazines (s-heptazines) - from a "mystery molecule" to industrially relevant carbon nitride materials, Coord. Chem. Rev. 257 (2013) 2032-2062). The photocatalytic performance of g-$C_3N_4$ has been restricted

by the low efficiency, mainly due to the fast charge recombination (Wang, Y.; Wang, X. C; Antonietti, M. Angew. Chem., Int. Ed. 2012, 51, 68-89; Wang, X. C.; Blechert, S.; Antonietti, M. ACS Catal. 2012, 2, 1596-1606; Zheng, Y.; Liu, J.; Liang, J.; Jaroniec, M.; Qiao, S. Energy Environ. Sci. 2012, 5, 6717-6731). In order to improve the photocatalytic performance of g-C$_3$N$_4$ researchers have developed various strategies to address this issue, such as controlling shape introducing heteroatoms (B, S, P, and Zn), or including metal/not metal doping (Cui, Y. J.; Ding, Z. X.; Fu, X. Z.; Wang, X. C. Angew. Chem., Int. Ed. 2012, 51, 11814-11818; Lin, Z. Z.; Wang, X. C. Angew. Chem., Int. Ed. 2013, 52, 1735-1738).

There is still the need to provide photocatalytic properties in the visible light field to final cement supports.

## SUMMARY OF THE INVENTION

The inventors of the present invention have surprisingly found a cementitious composition for the degradation of pollutants, the decontamination of the environment, and the prolonged retention of the superficial appearance, activated by visible light.

Therefore, the present invention relates to a cementitious composition comprising:

- a hydraulic binder;
- a photocatalyst consisting of at least an alkaline metal salt of poly(heptazine imide);
- an optional aggregate.

The inventors specifically found out the use of photocatalyst in a cement composition for preparing paste and/or mortar and/or concrete can allow to produce a photocatalytic product, being said photocatalyst active by visible light. When in the present invention, the following terms are used:

- "Hydraulic binder" it is a finely ground inorganic material which, when mixed with water, forms a paste which sets and hardens by means of hydration reaction and which, after hardening retains its strength and stability even under water. Among the hydraulic binder all kinds of cements can be cited, as defined and classified in the UNI EN 197-1: 2011, UNI EN 413-1:2011, and UNI EN 15368:2010;
- "paste" is a hydraulic binder that has been mixed with water;
- "mortar" is a mixture of cement paste and sand used in thin layers, it is a specific type of concrete with a small maximum aggregate size, as defined and classified in the UNI EN 998-1:2016, and UNI EN 1504:2005;
- "concrete" is a mixture of sand, gravel, and rocks held together by cement paste, as defined and classified in the UNI EN 206-1:2016;
- "alkaline metal salt of poly(heptazine imide)" it is meant a salt of an alkaline metal of poly(heptazine imide), preferably the sodium salt.

Therefore the present invention relates to new photocatalytic cement compositions capable to be added to water in order to have a paste, a mortar or a concrete for the degradation of pollutants, the decontamination of the environment, and the prolonged retention of the superficial appearance, activated by visible light.

In another aspect the invention relates to a use of a alkaline metal salt of poly(heptazine imide) for preparing a whole or a part of photocatalytic product, preferably a photocatalytic paste, a photocatalytic mortar or a photocatalytic concrete.

The photocatalyst of the invention is then part of the cementitious composition and hence being incorporated in the final mortar, paste or concrete, or in part of them. In a further embodiment the photocatalyst can be part of a cementitious layer to be applied on a substrate.

In a preferred aspect, the photocatalytic cementitious composition according to the invention does not comprise TiO$_2$, both in anatase and rutile forms.

According to a further aspect of the present invention, there is provided a method of photocatalytically decomposing an air pollutant, optionally nitrogen oxide (NOx), the method comprising contacting the air pollutant with a cement product obtainable by a cementitious composition comprising an alkaline metal salt of poly(heptazine imide)photocatalyst.

## DETAILED DESCRIPTION OF THE INVENTION

Therefore, the present invention relates to a cementitious composition comprising:

- a hydraulic binder;
- a photocatalyst consisting of at least an alkaline metal salt of poly(heptazine imide);
- an optional aggregate.

The cementitious composition according to the invention comprises an hydraulic binder as above defined, .i.e., a finely ground inorganic material which, when mixed with water, forms a paste which sets and hardens by means of hydration reaction and which, after hardening retains its strength and stability even under water. Among the hydraulic binder all kinds of cements can be cited, as defined and classified in the UNI EN 197-1: 2011, UNI EN 413-1:2011, and UNI EN 15368:2010 The cementitious composition according to the present invention comprises a photocatalyst consisting of at least an alkaline salt of poly(heptazine imide). Such a photocatalyst in the presence of light, air, and/or environmental humidity (i.e. comprising oxygen and water), is capable to catalyze a decomposition reaction of one or more environmentally polluting substances (also referred to as: "pollutant"). The present cementitious composition has photocatalytic activity and efficient photocatalytic capacity. The term "photocatalytic activity" refers to the capacity to obtain the abatement of contaminants under solar-simulating radiation and/or visible light radiation. The activity is conventionally measured as % NOx conversion according to standards known in the art e.g., according to UNI 11247:2010.

The term "efficient photocatalytic capacity" refers to the capacity to obtain, comparatively, a higher abatement of contaminants under solar-simulating radiation (conventionally measured as % NO conversion, according to UNI 11247:2010) with respect to a commercial visible light activated $TiO_2$.

Preferably the at least alkaline metal salt of poly(heptazine imide) is sodium or potassium or lithium or cesium salt of poly(heptazine imide); more preferably the at least alkaline metal salt of poly(heptazine imide) is sodium salt of poly(heptazine imide) also abbreviated as "PHI-Na".

Preferably, PHI-Na is a yellow powder, with BET surface area of about 35 $m^2$/g (calculated by the Brunauer-Emmett-Teller model to adsorption isotherms, $N_2$ at 77.4 K, for 0.05<p/po<0.3), a density more than 1 g/$cm^3$ (calculated by gas pycnometer) and having the following chemical composition $C_3N_{4.15}H_{2.59}O_{0.24}Na_{0.55}$.

A detailed description of the synthesis procedure and the chemical and physical characterization of the photocatalyst used in the cementitious composition of the invention is indicated in the following articles: Zupeng Chen, Aleksandr Savateev, Sergey Pronkin; "The Easier the Better" Preparation of Efficient Photocatalysts-Metastable Poly(heptazine imide) Salts"; Adv. Mater. 2017, 29, 1700555; Zupeng Chen, Aleksandr Savateev, Sergey Pronkin; "Supporting Information"; Adv. Mater., DOI: 10.1002/adma.201700555.

In a preferred aspect, the cementitious composition according to the invention does not comprise $TiO_2$, both in anatase and rutile forms.

Therefore the present invention relates to new photocatalytic cementitious compositions capable to be added to water in order to have a cement product, preferably a cement paste, a cement mortar or a cement concrete for the degradation of pollutants, the decontamination of the environment, and the prolonged retention of the superficial appearance, activated by visible light.

In another aspect the invention relates to a use of a alkaline metal salt of poly(heptazine imide) for preparing a whole or a part of cement product, preferably a photocatalytic paste, a photocatalytic mortar or a photocatalytic concrete.

The photocatalyst of the invention is then part of the cementitious composition and hence being incorporated in the final cementitious product selected from a mortar, a paste and a concrete, or in part of them. In a further embodiment the photocatalyst can be part of a cementitious layer to be applied on a substrate, preferably a cementitious product.

In some embodiments, the photocatalyst is incorporated in and/or on at least a portion of the cementitious products which could be selected from the group consisting of cementitious pastes, mortars and concretes.

The preferred photocatalyst is hence poly(heptazine imide) sodium salt, called PHI-Na which is advantageously randomly distributed in the cement product and/or on the surface of the cement product.

The cementitious composition can optionally contain an aggregate. The "aggregate", also known as "inerts" or "inert aggregate", is classified in the UNI EN 206 standard. The aggregate can be a fine aggregate such as sand, or a coarse aggregate.

The cement products made of the cementitious composition of the invention are obtained by addition of water to the cementitious composition of the invention. Typically, but not exclusively, the amount of water to be added is expressed with respect to the hydraulic binder contained in the cementitious composition. The water/binder ratio (w/w) is preferably in the range from 0.3 and 0.7.

Cement products, obtained through adding water to the aforesaid cementitious compositions, may include, without limitation, both cement pastes obtainable by cementitious compositions of the invention without aggragates, and, in some embodiments, cementitious conglomerate products obtainable by cementitious compositios comprising at least one aggregate.

Non-limiting conglomerate cementitious products include mortars obtainable by adding water to the cementitious composition of the invention comprising also fine aggregates, and concretes obtainable by adding water to the cementitious composition of the invention comprising also fine aggregate and coarse aggregate. The amount of aggregate, the water/hydraulic binder ratio (w/w) and the mixing method used to form cementitious products are those used conventionally in this sector.

In some preferred embodiments, the surface of the final cement products can be roughened so as to increase the specific surface in contact with the air.

The amount of photocatalyst is preferably in an amount below or equal to 10% with respect to the amount of the hydraulic binder, preferably from 0.01 % to 10% by weight with respect to the amount of the hydraulic binder. In some embodiments, the range is from 1% to 5%, preferably from 2% to 4% by weight with respect to the amount by weight of the hydraulic binder.

The invention will be now detailed with reference to non-limitative preparation and evaluation example.

## EXPERIMENTAL PART

The photocatalytic activity of the cementitious composition comprising PHI-Na photocatalyst, was evaluated by $NO_x$ abatement procedure.

The following procedure was used in order to have a method aimed at assessing the index of photocatalytic abatement due to the action of photocatalytic materials. The sample to be investigated was collocated inside a glass reactor in which a flow of air simulating a possible atmospheric pollution and containing 0.55 ppm of NOx, specifically $NO_2$=0.15 ppm and NO=0.4 ppm, is introduced as continuous gas flow, 1.5 l/min.

During the first phase in dark conditions, the concentration of the gas entering and leaving the reactor was measured continuously. When the concentration of the outlet gas from the reactor was stable, the second phase of the test started and the sample was illuminated by visible lamps. The illumination activated the photocatalytic reactions, which lead to the degradation of the NOx. The difference between the NOx concentration measured in the dark and the light phase allows to calculate the index of the photocatalytic abatement $A_c$:

$$A_C = 100\frac{(C_B - C_L)}{C_B}$$

wherein

$A_C$ = photocatalytic adimensional abatement index under test conditions (%).
$C_B$ = NOX concentration at the reactor's exit in dark conditions (ppb).
$C_L$ = NOX concentration at the reactor's exit under radiation (ppb).

For all the tests carried out, the surface of the samples S was 61 $cm^2$.

In exemplary procedures, the sample to be investigated was collocated inside the reaction chamber containing a blue led visible lamp such that, at the specimen level, having a wavelength peak between 400 and 500 nm. The irradiation system provided an average illuminance of 4000 lux on the specimen surface during the test.

Example 1: Evaluation of the photocatalytic activity of catalysts

Preliminary photocatalytic characterization of the photocatalysts in powder form was necessary for the preparation of the mortar samples and to make a correct comparison.

In order to compare the results, the photocatalyst weight was kept constant in the preparation of the experimental photocatalyst, in particular, 1 g of products were used.

The following catalysts were tested:

PHI-Na: Sodium salt of poly(heptazine imide)
AHP200: $TiO_2$ provided by Sachtleben
g-$C_3N_4$: graphitic carbon Nitride (provided by Fairland technology)
vip7000: $TiO_2$, i.e. doped titanium dioxide Kronos vlp 7000 - a visible light activated photocatalyst)

The preparation of the powder samples occurred in three phases:

- mixing the photocatalyst with 2-propanol (20ml);
- bath sonication of the mixture for 10 min;
- drying at room temperature.

For the bath sonication a BANDELIN SONOREX (frequency of 35 kHz and power 80/320 W) was used.

The next drying process allowed the formation of a homogeneous and continuous deposit, ready for the measurement of Ac.

The results of the photocatalytic tests, in continuous flow, performed on the powder samples are reported in the following Table 1

Table 1: index of photocatalytic abatement $A_c$ due to the action of photocatalytic materials

| Ac in continuous flow for powders | | |
|---|---|---|
| Catalyst | UV light | Visible Light (400-500nm) |
| PHI-Na | 29% | 26% |
| AHP 200 | 30% | 8% |
| g-$C_3N_4$ | 30% | 15% |
| vlp7000 | 20% | 8% |

As reported in Table 1 all the photocatalysts were capable to abate all NOx pollutants in the UV field, while in the visible light field PHI-Na resulted to be more efficient, even if less at the UV light field.

Example 2: Evaluation of the photocatalytic activity of a mortar obtainable by the composition of the invention

The photocatalytic index determination of the mortars was performed on the basis of the UNI 11247:2010, adopting two percentages of the photocatalysts, 2% and 4 %, by weight of hydraulic binder. The photocatalysts were used in substitution of the same quantity of cement.

Mortar sample preparation was done by mixing the raw materials in predetermined amounts, following the indications of the UNI EN 196-1:2016:

- 1350 g of sands;
- 450 g of hydraulic binder (with 2 or 4% of photocatalyst);
- 225 g of water.

The samples were cured in a climatic chamber (RH=90% and T=20°C) for 7 days, subsequently they remained in the room at RH=60% and T=20 °C for all the time before the measurement.

The photocatalytic tests on mortar samples were carried out with the following catalysts:

PHI-Na: Sodium salt of poly(heptazine imide)
AHP200: $TiO_2$ provided by Sachtleben
g-$C_3N_4$: graphitic carbon Nitride (provided by Fairland technology)
vip7000: $TiO_2$, i.e. doped titanium dioxide Kronos vlp 7000 - a visible light activated photocatalyst).

The mortars were tested with two different lamps, in UV light and visible conditions.

Table 2 reports the results of the photocatalytic tests on mortar samples.

Table 2: photocatalytic activity of mortars.

| Ac in continuous flow for mortars | | |
|---|---|---|
| Code | UV light | Visible Light (400-500nm) |
| PHI-Na 2% | 15% | 20% |
| PHI-Na 4% | 15% | 22% |
| AHP 200 2% | 30% | <5% |
| AHP 200 4% | 30% | <5% |
| g-$C_3N_4$ commercial 2% | 9% | <5% |
| Vlp7000-2% | 15% | <5% |
| Vlp7000-4% | 15% | 5% |

The cementitious compositions of the invention comprising PHI-Na in the respective amounts of 2% and 4% was surprisingly more active when subjected to visible light than to UV light. In a cementitious composition hence PHI-Na was more photocatalytically active at visible light than at UV light. The remaining catalysts of the prior art resulted to be insufficiently photocatalytically active at visible light, even if they were more active at UV light field than the PHI-Na.

As above shown the cementitious composition of the invention when added with water and subjected to visible light showed a synergistic effect with respect to photocatalytic activity of the same catalyst singularly considered.

**Claims**

1. A cementitious composition comprising:

   - a hydraulic binder;
   - a photocatalyst consisting of at least an alkaline metal salt of poly(heptazine imide);
   - an optional aggregate.

2. The cementitious composition of claim 1 wherein the hydraulic binder is as defined in the UNI EN 197-1: 2011, UNI EN 413-1:2011, and UNI EN 15368:2010, preferably it is grey cement of 32,5 type.

3. The cementitious composition according to claim 1 or claim 2, wherein the at least alkaline metal salt of poly(heptazine imide) is the sodium salt of poly(heptazine imide).

4. The cementitious composition according to anyone of claims 1-3 wherein the amount of photocatalyst is below or equal to 10% by weight with respect to the amount of the hydraulic binder.

5. The cementitious composition according to claim 4, wherein the amount of the photocatalyst is from 0.01 % to 10% by weight with respect to the amount of the hydraulic binder.

6. The cementitious composition according to claim 4 or 5, wherein the amount of the photocatalyst is from 1% to 5% by weight with respect to the amount of the hydraulic binder, preferably from 2% to 4% by weight with respect to the amount by weight of the hydraulic binder

7. The cementitious composition according to anyone of claims 1-6, wherein the optional aggregate is classified in the UNI EN 206 standard and is a fine aggregate or a coarse aggregate.

8. A cement product obtainable by addition of water to the cementitious composition of anyone of claims 1-7.

9. The cement product according to claim 8 selected from the group consisting of a cement mortar, a cement paste and a cement concrete.

10. The cement product according to claim 8 or claim 9, wherein the water/hydraulic binder ratio (w/w) is in the range from 0.3 and 0.7.

11. A use of a alkaline metal salt of poly(heptazine imide) for preparing a whole or a part of a photocatalytic paste, a photocatalytic mortar or a photocatalytic concrete.

12. The use of claim 11, wherein the alkaline metal salt of poly(heptazine imide) is the sodium salt of poly(heptazine imide).

13. A method for photocatalytically decomposing an air pollutant, preferably the nitrogen oxides (NOx) pollutants, comprising the step of contacting the air pollutant with a cement product according to anyone of claims 8-10.

**EUROPEAN SEARCH REPORT**

Application Number

EP 18 21 4192

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 986 693 A (NANJING BEILIDA NEW MAT SYSTEM ENGINEERING CO LTD) 4 May 2018 (2018-05-04) * paragraphs [0002], [0009], [0012] * ----- | 1-13 | INV. C04B24/12 C04B28/02 B01D53/86 B01J35/00 |
| Y,D | ZUPENG CHEN ET AL: ""The Easier the Better" Preparation of Efficient Photocatalysts-Metastable Poly(heptazine imide) Salts", ADVANCED MATERIALS, vol. 29, no. 32, 20 June 2017 (2017-06-20) , pages 1-8, XP055591782, DE ISSN: 0935-9648, DOI: 10.1002/adma.201700555 * page 1 * * page 4, left-hand column * ----- | 1-13 | |
| Y | ZUPENG CHEN ET AL: ""The Easier the Better" Preparation of Efficient Photocatalysts-Metastable Poly(heptazine imide) Salts- Supporting Information", ADVANCED MATERIALS, vol. 29, no. 32, 20 June 2017 (2017-06-20) , pages 1-16, XP055591875, DE ISSN: 0935-9648, DOI: 10.1002/adma.201700555 * the whole document * ----- | 1-13 | TECHNICAL FIELDS SEARCHED (IPC) C04B B01D B01J |

-/--

The present search report has been drawn up for all claims

| Place of search | Date of completion of the search | Examiner |
|---|---|---|
| The Hague | 24 May 2019 | Theodoridou, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 18 21 4192

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEKSANDR SAVATEEV ET AL: "Potassium Poly(heptazine imides) from Aminotetrazoles: Shifting Band Gaps of Carbon Nitride-like Materials for More Efficient Solar Hydrogen and Oxygen Evolution", CHEMCATCHEM, vol. 9, no. 1, 31 October 2016 (2016-10-31), pages 167-174, XP055499806, DE ISSN: 1867-3880, DOI: 10.1002/cctc.201601165 * the whole document * | 1-13 | |
| Y | NIKOKAVOURA ASPASIA ET AL: "Graphene and g-C3N4based photocatalysts for NOxremoval: A review", APPLIED SURFACE SCIENCE, vol. 430, 6 September 2017 (2017-09-06), pages 18-52, XP085288721, ISSN: 0169-4332, DOI: 10.1016/J.APSUSC.2017.08.192 * paragraphs [01.4], [02.1] * | 13 | |
| A | DE 10 2012 007529 A1 (UNIV FREIBERG TECH BERGAKAD [DE]) 17 October 2013 (2013-10-17) * paragraphs [0004], [0010]; claims 1,6,10 * | 1,2,7-10 | TECHNICAL FIELDS SEARCHED (IPC) |

The present search report has been drawn up for all claims

| Place of search | Date of completion of the search | Examiner |
|---|---|---|
| The Hague | 24 May 2019 | Theodoridou, K |

EPO FORM 1503 03.82 (P04C01)

## ANNEX TO THE EUROPEAN SEARCH REPORT
## ON EUROPEAN PATENT APPLICATION NO.

EP 18 21 4192

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2019

| Patent document cited in search report | Publication date | Patent family member(s) | Publication date |
|---|---|---|---|
| CN 107986693 A | 04-05-2018 | NONE | |
| DE 102012007529 A1 | 17-10-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9805601 A

- WO 2004074202 A

**Non-patent literature cited in the description**

- **LIU, Z. ; WU, B. ; ZHU, Y. ; WANG, F. ; WANG, L.** *J. Colloid Interface Sci.,* 2013, vol. 392, 337-380
- **HOU, J. ; CAO, R. ; WANG, Z. ; JIAO, S. ; ZHU, H.** *J. Hazard. Mater.,* 2012, vol. 217-218, 177-186
- **DONG, F. ; SUN, Y. J. ; FU, M. ; WU, Z. B. ; LEE, S. C.** *J. Hazard. Mater.,* 2012, vol. 219-220, 26-34
- **DONG, F. ; SUN, Y. J. ; FU, M. ; HO, W. K. ; LEE, S. C. ; WU, Z. B.** *Langmuir,* 2012, vol. 28, 766-773
- **KASAHARA, A. ; MUKUMIZU, K. ; HITOKI, G. ; TAKATA, T. ; KONDO, J. N. ; HARA, M. ; KOBAYASHI, H. ; DOMEN, K. J.** *Phys. Chem. B,* 2003, vol. 107, 791-797
- **MAEDA, K. ; TERAMURA, K. ; LU, D. ; TAKATA, T. ; SAITO, N. ; INOUE, Y. ; DOMEN, K.** *Nature,* 2006, vol. 440, 295-295
- **TESSIER, F. ; MAILLARD, P. ; CHEVIRE, F. ; DOMEN, K. ; KIKKAWA, S.** *J.Ceram. Soc. Jpn.,* 2009, vol. 117, 1-5
- **MAEDA, K. ; DOMEN, K.** *J. Phys. Chem. C,* 2007, vol. 111, 7851-7861
- **SAYAMA, K. ; ARAKAWA, H.** *J. Photochem. Photobiol., A: Chem.,* 1994, vol. 77, 243-247
- **WANG, X. C. ; MAEDA, K. ; THOMAS, A. ; TAKANABE, K. ; XIN, G. ; CARLSSON, J. M. ; DOMEN, K. ; ANTONIETTI, M.** *Nat. Mater.,* 2009, vol. 8, 76-80
- **WANG, Y. ; WANG, X. C. ; ANTONIETTI, M.** *Angew. Chem., Int. Ed.,* 2012, vol. 51, 68-89
- **X. WANG ; K. MAEDA ; AR. THOMAS ; K. TAKANABE ; G. XIN ; J.M. CARLSSON ; K. DOMEN ; M. ANTONIETTI.** A metal-free polymeric photocatalyst for hydrogen production from water under visible light. *Nat. Mater.,* 2009, vol. 8, 76-80

- **Z. WANG ; W. GUAN ; Y. SUN ; F. DONG ; Y. ZHOU ; W.-K. HO.** Water-assisted production of honeycomb-like g-C3N4 with ultralong carrier lifetime and outstanding photocatalytic activity. *Nanoscale,* 2015, vol. 7, 2471-2479
- **S. WANG ; C. LI ; T. WANG ; P. ZHANG ; A. LI ; J. GONG.** Controllable synthesis of nanotube-type graphitic C3N4 and their visible-light photocatalytic and fluorescent properties. *J. Mater. Chem. A,* 2014, vol. 2, 2885-2890
- **A. SCHWARZER ; T. SAPLINOVA ; E. KROKE.** Tri-s-triazines (s-heptazines) - from a "mystery molecule" to industrially relevant carbon nitride materials. *Coord. Chem. Rev.,* 2013, vol. 257, 2032-2062
- **WANG, Y. ; WANG, X. C ; ANTONIETTI, M.** *Angew. Chem., Int. Ed.,* 2012, vol. 51, 68-89
- **WANG, X. C. ; BLECHERT, S. ; ANTONIETTI, M.** *ACS Catal.,* 2012, vol. 2, 1596-1606
- **ZHENG, Y. ; LIU, J. ; LIANG, J. ; JARONIEC, M. ; QIAO, S.** *Energy Environ. Sci.,* 2012, vol. 5, 6717-6731
- **CUI, Y. J. ; DING, Z. X. ; FU, X. Z. ; WANG, X. C.** *Angew. Chem., Int. Ed.,* 2012, vol. 51, 11814-11818
- **LIN, Z. Z. ; WANG, X. C.** *Angew. Chem., Int. Ed.,* 2013, vol. 52, 1735-1738
- **ZUPENG CHEN ; ALEKSANDR SAVATEEV ; SERGEY PRONKIN.** The Easier the Better" Preparation of Efficient Photocatalysts-Metastable Poly(heptazine imide) Salts. *Adv. Mater.,* 2017, vol. 29, 1700555
- **ZUPENG CHEN ; ALEKSANDR SAVATEEV ; SERGEY PRONKIN.** Supporting Information. *Adv. Mater.*